(19) Europäisches Patentamt
European Patent Office
Office européen des brevets

(11) **EP 3 960 708 A1**

(12) **EUROPEAN PATENT APPLICATION**
published in accordance with Art. 153(4) EPC

(43) Date of publication:
**02.03.2022 Bulletin 2022/09**

(21) Application number: **20794345.7**

(22) Date of filing: **24.04.2020**

(51) International Patent Classification (IPC):
**C01G 53/00** (2006.01)    **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2020/017614**

(87) International publication number:
**WO 2020/218475 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2019 JP 2019085007**

(71) Applicant: **Panasonic Intellectual Property
Management Co., Ltd.
Osaka-shi, Osaka 540-6207 (JP)**

(72) Inventors:
• **TOGO, Masakazu
Chuo-ku, Osaka-shi, Osaka 540-6207 (JP)**
• **KAWADA, Hiroshi
Chuo-ku, Osaka-shi, Osaka 540-6207 (JP)**
• **FUKUI, Atsushi
Chuo-ku, Osaka-shi, Osaka 540-6207 (JP)**

(74) Representative: **Vigand, Philippe et al
Novagraaf International SA
Chemin de l'Echo 3
1213 Onex - Genève (CH)**

(54) **POSITIVE ELECTRODE ACTIVE MATERIAL FOR NON-AQUEOUS ELECTROLYTE SECONDARY BATTERY, AND NON-AQUEOUS ELECTROLYTE SECONDARY BATTERY**

(57) A positive electrode active material for a non-aqueous electrolyte secondary battery contains a lithium-nickel-manganese-containing composite oxide which is represented by composition formula $Li_xNi_yMn_zMe_{1-y-z}O_2$ (where Me is a metal element other than Li, Ni, and Mn, $x \leq 1.16$, $0.3 \leq y \leq 0.7$, and $0.3 \leq z \leq 0.7$), has a layered structure belonging to space group R-3m, and has a diffraction peak at $2\theta$ in the range of greater than or equal to 65° and less than or equal to 67° in an X-ray diffraction pattern when charging and discharging are performed until the charge voltage reaches 4.8 V.

EP 3 960 708 A1

**Description**

Technical Field

The present invention relates to technology of a positive electrode active material for a non-aqueous electrolyte secondary battery and a non-aqueous electrolyte secondary battery.

Background Art

In recent years, as a secondary battery having high output and high energy density, a non-aqueous electrolyte secondary battery, which includes a positive electrode, a negative electrode, and a non-aqueous electrolyte and in which lithium ions or the like are moved between the positive electrode and the negative electrode to perform charging and discharging, has been widely used.

As a positive electrode active material used for a positive electrode of a non-aqueous electrolyte secondary battery, for example, the material described below is known.

For example, Patent Literature 1 discloses a positive electrode active material containing a lithium-nickel-manganese-containing composite oxide which has a layered rock salt structure (O3 structure) not containing NiO as a secondary phase, has a Li/transition metal (molar ratio) of greater than or equal to 0.80 and less than or equal to 0.94, contains at least Ni and Mn as transition metals, has a Mn/Ni molar ratio of greater than 1.08, has a Ni atom occupancy in the Li main layer of greater than or equal to 0.0% and less than or equal to 6.0%, and has a Na content of less than or equal to 0.2 wt%.

Citation List

Patent Literature

PTL 1: Japanese Published Unexamined Patent Application No. 2008-137837
PTL 2: Japanese Published Unexamined Patent Application No. 2015-198052

Summary of Invention

In order to further increase the energy density of a non-aqueous electrolyte secondary battery, it is desired to perform charging and discharging at a charge voltage of greater than or equal to 4.8 V. However, in a non-aqueous electrolyte secondary battery which uses a positive electrode active material containing a lithium-nickel-manganese-containing composite oxide, there is a problem in that if charging and discharging are repeatedly performed at a charge voltage of greater than or equal to 4.8 V, for example, an irreversible structural change of the composite oxide will occur, resulting in degradation in charge-discharge cycle characteristics.

Accordingly, it is an object of the present disclosure to provide a positive electrode active material for a non-aqueous electrolyte secondary battery and a non-aqueous electrolyte secondary battery, which can suppress degradation in charge-discharge cycle characteristics when charging and discharging are performed at a charge voltage of greater than or equal to 4.8 V.

A positive electrode active material for a non-aqueous electrolyte secondary battery according to an aspect of the present disclosure contains a lithium-nickel-manganese-containing composite oxide which is represented by composition formula $Li_xNi_yMn_zMe_{1-y-z}O_2$ (where Me is a metal element other than Li, Ni, and Mn, $x \leq 1.16$, $0.3 \leq y \leq 0.7$, and $0.3 \leq z \leq 0.7$), has a layered structure belonging to space group R-3m, and has a diffraction peak at $2\theta$ in the range of greater than or equal to 65° and less than or equal to 67° in an X-ray diffraction pattern when charging and discharging are performed until the charge voltage reaches 4.8 V.

Furthermore, a non-aqueous electrolyte secondary battery according to an aspect of the present disclosure includes the positive electrode active material for a non-aqueous electrolyte secondary battery.

According to an aspect of the present disclosure, it is possible to suppress degradation in charge-discharge cycle characteristics when charging and discharging are performed at a charge voltage of greater than or equal to 4.8 V. Brief Description of Drawings

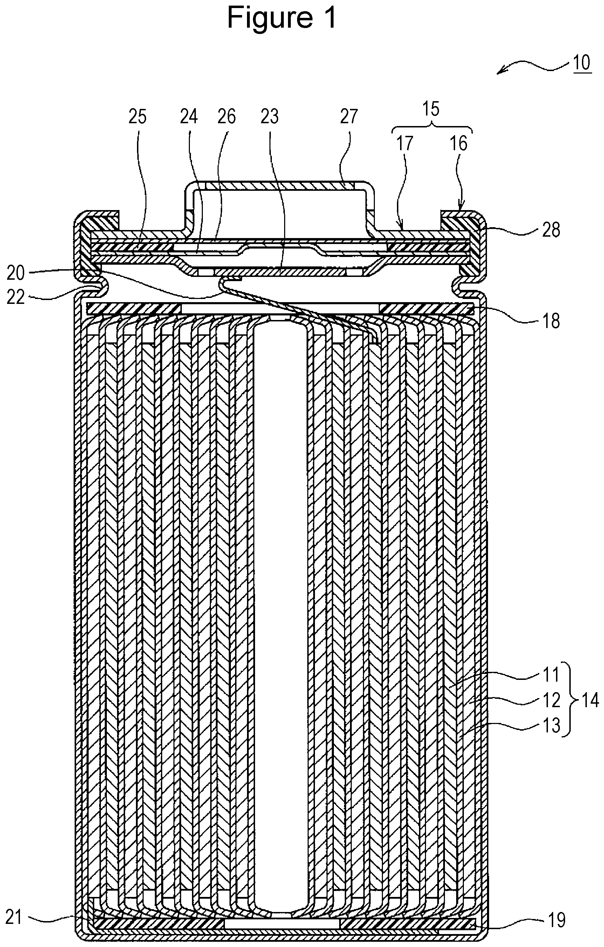

[Figure 1] Figure 1 is a cross-sectional view of a non-aqueous electrolyte secondary battery as an example of an embodiment.

Description of Embodiments

A positive electrode active material for a non-aqueous electrolyte secondary battery according to an aspect of the present disclosure contains a lithium-nickel-manganese-containing composite oxide which is represented by composition formula $Li_xNi_yMn_zMe_{1-y-z}O_2$ (where Me is a metal element other than Li, Ni, and Mn, $x \leq 1.16$, $0.3 \leq y \leq 0.7$, and $0.3 \leq z \leq 0.7$), has a layered structure belonging to space group R-3m, and has a diffraction peak at $2\theta$ in the range of greater than or equal to 65° and less than or equal to 67° in an X-ray diffraction pattern when charging and discharging are performed until the charge voltage reaches 4.8 V. Furthermore, a positive electrode active material for a non-aqueous electrolyte secondary battery according to an aspect of the present disclosure can suppress degradation in charge-discharge cycle characteristics even when charging and discharging are performed at a charge voltage of greater than or equal to 4.8 V.

The diffraction peak at $2\theta$ in the range of greater than or equal to 65° and less than or equal to 67° in an X-ray diffraction pattern is considered to be caused because metal elements are rearranged by charging at a voltage of greater than or equal to 4.8 V and discharging. In a positive electrode active material for a non-aqueous electrolyte secondary battery according to an aspect of the present disclosure, by charging at a voltage of greater than or equal to 4.8 V and discharging, it is considered that the composition changes such that the ratio of metal elements to Li after charging and discharging is higher than that before charging, from which it is surmised that metal elements are rearranged. The occurrence of the diffraction peak shows that even when a large amount of Li is swept by charging and discharging, a change in the crystal structure is suppressed. Consequently, deterioration in the subsequent charge-discharge cycle can be suppressed. Furthermore, as the occupancy of metal elements other than Li existing in a Li layer increases, the suppression effect can be expected, and thus, the peak is likely to occur. When the occupancy is about 7 to 10%, stability in the layered structure can be improved, which is preferable.

A non-aqueous electrolyte secondary battery including a positive electrode active material for a non-aqueous electrolyte secondary battery according to an aspect of the present disclosure can suppress degradation in charge-discharge cycle characteristics even when charging and discharging are repeatedly performed at a charge voltage of greater than or equal to 4.8 V. However, the use of the secondary battery is not limited to the method of use in which charging and discharging are repeatedly performed at a charge voltage of greater than or equal to 4.8 V, and the method of use in which charging and discharging are repeatedly performed at a charge voltage of less than 4.8 V may be employed.

An example of a non-aqueous electrolyte secondary battery according to an aspect of the present disclosure will be described below.

Figure 1 is a cross-sectional view of a non-aqueous electrolyte secondary battery as an example of an embodiment. A non-aqueous electrolyte secondary battery 10 shown in Figure 1 includes a wound-type electrode body 14 in which a positive electrode 11 and a negative electrode 12 are wound with a separator 13 interposed therebetween, a non-aqueous electrolyte, insulating plates 18 and 19 which are placed on the upper side and the lower side of the electrode body 14, respectively, and a battery case 15 which accommodates the members described above. The battery case 15 includes a closed-bottom, cylindrical case main body 16 and a sealing body 17 which seals an opening of the case main body 16. Note that, instead of the wound-type electrode body 14, an electrode body of another type, such as a stacked-type electrode body in which positive electrodes and negative electrodes are alternately stacked with a separator interposed therebetween may be used. Furthermore, examples of the battery case 15 include a metal case having a cylindrical shape, a prismatic shape, a coin shape, a button shape, or the like, and a resin case (laminate battery) formed by laminating resin sheets.

The case main body 16 is, for example, a closed-bottom, cylindrical metal container. A gasket 28 is provided between the case main body 16 and the sealing body 17 so that airtightness inside the battery can be secured. The case main body 16 has a protruding portion 22 in which, for example, a part of a side portion protrudes toward the inside and which supports the sealing body 17. The protruding portion 22 is preferably formed in an annular shape along the circumferential direction of the case main body 16, and the upper surface thereof supports the sealing body 17.

The sealing body 17 has a structure in which a filter 23, a lower valve body 24, an insulating member 25, an upper valve body 26, and a cap 27 are stacked in this order from the electrode body 14 side. The individual members constituting the sealing body 17 have, for example, a circular plate shape or a ring shape, and the members other than the insulating member 25 are electrically connected to one another. The lower valve body 24 and the upper valve body 26 are connected to each other at the central portions thereof, and the insulating member 25 is interposed between the peripheral portions thereof. When the internal pressure of the non-aqueous electrolyte secondary battery 10 is increased by heat generation due to internal short circuit or the like, for example, the lower valve body 24 is deformed so as to push the upper valve body 26 up toward the cap 27 and is broken, and the current path between the lower valve body 24 and the upper valve body 26 is cut off. When the internal pressure is further increased, the upper valve body 26 is broken, and gas is exhausted from an opening of the cap 27.

In the non-aqueous electrolyte secondary battery 10 shown in Figure 1, a positive electrode lead 20 attached to the positive electrode 11 extends through a through-hole of the insulating plate 18 to the sealing body 17 side, and a negative electrode lead 21 attached to the negative electrode 12 passes along the outside of the insulating plate 19 and extends to the bottom side of the case main body 16. The positive electrode lead 20 is connected by welding or the like to a lower surface of the filter 23 which is a bottom plate of the sealing body 17, and the cap 27 which is a top plate of the sealing body 17 electrically connected to the filter 23 serves as a positive electrode terminal. The negative electrode lead 21 is connected by welding or the like to an inner surface of the bottom of the case main body 16, and the case main body 16 serves as a negative electrode terminal.

The positive electrode 11, the negative electrode 12, the non-aqueous electrolyte, and the separator 13 will be described in detail below.

<Positive electrode>

The positive electrode 11 includes a positive electrode current collector such as a metal foil, and a positive electrode active material layer formed on the positive electrode current collector. As the positive electrode current collector, a foil of a metal, such as aluminum, that is stable in the potential range of the positive electrode, a film in which the metal is disposed as a surface layer, or the like can be used. The positive electrode active material layer contains, for example, a positive electrode active material, a binder, an electroconductive material, and the like.

The positive electrode 11 is obtained, for example, by applying a positive electrode mixture slurry containing a positive electrode active material, a binder, an electroconductive material, and the like to a positive electrode current collector, followed by drying to form a positive electrode active material layer on the positive electrode current collector, and rolling the positive electrode active material layer.

The positive electrode active material contains a lithium-nickel-manganese-containing composite oxide which is represented by composition formula $Li_xNi_yMn_zMe_{1-y-z}O_2$ (where Me is a metal element other than Li, Ni, and Mn, $x \leq 1.16$, $0.3 \leq y \leq 0.7$, and $0.3 \leq z \leq 0.7$) and has a layered structure belonging to space group R-3m.

In the composition formula, x represents the molar ratio of Li to the total amount of Ni, Mn, and Me, and as described above, $x \leq 1.16$ should be satisfied. From the viewpoint of high charge capacity retention ratio, preferably $x \leq 1.08$. The lower limit value of x in the composition formula may be set within a range that does not significantly impair the battery capacity. For example, preferably $0.95 \leq x$, and more preferably $1.0 \leq x$.

In the composition formula, y represents the molar ratio of Ni to the total amount of Ni, Mn, and Me, and as described above, $0.3 \leq y \leq 0.7$ should be satisfied. From the viewpoint of battery capacity and thermal stability, preferably $0.4 \leq y \leq 0.6$.

In the composition formula, z represents the molar ratio of Mn to the total amount of Ni, Mn, and Me, and as described above, $0.3 \leq y \leq 0.7$ should be satisfied. From the viewpoint of thermal stability and structural stability, preferably $0.4 \leq y \leq 0.6$.

Me constituting the composition formula is not particularly limited as long as it is a metal element other than Li, Ni, and Mn. For example, Me is at least one metal element selected from the group consisting of Co, Fe, Ti, Bi, Nb, W, Mo, Ta, Al, Mg, Si, Cr, Cu, Sn, Zr, Na, K, Ba, Sr, Be, Zn, Ca, and B. Among these, from the viewpoint of effectively suppressing degradation in charge-discharge cycle characteristics when charging and discharging are performed at a charge voltage of greater than or equal to 4.8 V, at least one metal element selected from the group consisting of Co, Fe, Ti, Bi, Nb, W, Mo, and Ta is preferable.

The contents of elements constituting the lithium-nickel-manganese-containing composite oxide according to the embodiment can be measured by an inductively coupled plasma-atomic emission spectrometer (ICP-AES), an electron probe microanalyzer (EPMA), an energy-dispersive X-ray analyzer (EDX), or the like.

In the lithium-nickel-manganese-containing composite oxide according to the embodiment, the occupancy of metal elements other than Li existing in a Li layer of the layered structure belonging to space group R-3m is preferably in the range of 7% to 10%, and more preferably in the range of 8% to 10%. When the occupancy of metal elements other than Li existing in the Li layer of the layered structure belonging to space group R-3m is within the range described above, compared with the case outside the range, the stability of the layered structure of the lithium-nickel-manganese-containing composite oxide is improved, and it is possible to suppress degradation in charge-discharge cycle characteristics when charging and discharging are performed at a charge voltage of greater than or equal to 4.8 V.

The occupancy of metal elements other than Li existing in the Li layer of the layered structure belonging to space group R-3m is obtained from results of Rietveld analysis of an X-ray diffraction pattern obtained by X-ray diffraction measurement of the lithium-nickel-manganese-containing composite oxide.

The X-ray diffraction pattern is obtained, using a powder X-ray diffractometer (manufactured by Rigaku Corporation, trade name "RINT-TTR", ray source Cu-K$\alpha$), by a powder X-ray diffraction method under the following conditions:

Measurement range; 15 to 120°
Scanning speed; 4°/min
Analysis range; 30 to 120°

Background; B-spline
Profile function; split pseudo-Voigt function
Constraint conditions; Li (3a) + Ni (3a) = 1
Ni (3a) + Ni (3b) = y
ICSD No.; 98-009-4814

Furthermore, in the Rietveld analysis of the X-ray diffraction pattern, PDXL2 (Rigaku Corporation) which is Rietveld analysis software is used.

Furthermore, the lithium-nickel-manganese-containing composite oxide according to the embodiment has a diffraction peak at 2θ in the range of 65° to 67° in an X-ray diffraction pattern when a non-aqueous electrolyte secondary battery is charged until the charge voltage reaches 4.8 V. As described above, the lithium-nickel-manganese-containing composite oxide having the diffraction peak has a stable crystal structure, and therefore, even when charging and discharging are performed at a charge voltage of greater than or equal to 4.8 V, a change in the crystal structure of the composite oxide can be suppressed, and degradation in charge-discharge cycle characteristics can be suppressed. The charging conditions in obtaining the X-ray diffraction pattern are as described in Examples. Furthermore, the lithium-nickel-manganese-containing composite oxide according to the embodiment has, besides the diffraction peak described above, usually, a diffraction peak of the (018) plane and a diffraction peak of the (110) plane at 2θ less than or equal to 65°.

The diffraction peak of the (018) plane exists, for example, at 2θ in the range of 63.2° to 64.5°. The diffraction peak of the (110) plane exists, for example, at 2θ in the range of 64° to 65.3°.

The full width at half maximum of the diffraction peak of the (018) plane is preferably, for example, in the range of 0.2° to 0.4°. The full width at half maximum of the diffraction peak of the (110) plane is preferably, for example, in the range of 0.25° to 0.45°. The full width at half maximum of the diffraction peak at 2θ in the range of 65° to 67° is preferably, for example, in the range of 0.15° to 0.3°. By satisfying the full widths at half maximum described above, in some cases, degradation in charge-discharge cycle characteristics can be more effectively suppressed when charging and discharging are performed at a charge voltage of greater than or equal to 4.8 V.

An example of a method for producing a lithium-nickel-manganese-containing composite oxide according to the embodiment will be described below.

As a method for producing a lithium-nickel-manganese-containing composite oxide according to the embodiment, a so-called "solid phase method" including mixing a lithium source, a nickel source, a manganese source, and optionally, an Me source at a desired ratio, and firing the resulting mixture is desirable.

Examples of the lithium source include lithium oxide, lithium hydroxide, lithium carbonate, and the like. Examples of the nickel source include nickel oxide, nickel hydroxide, nickel sulfate, nickel nitrate, and the like. Examples of the manganese source include manganese oxide, manganese hydroxide, manganese sulfate, manganese nitrate, and the like. Examples of the Me source include oxides, hydroxides, and the like of metal elements other than Li, Ni, Mn.

The nickel source and the manganese source may be compounded together. For example, a nickel-manganese-containing oxide, a nickel-manganese-containing hydroxide, or the like may be used. Furthermore, the Me source may be compounded with the nickel source and the manganese source. For example, a nickel-Me-containing oxide, a nickel-Me-containing hydroxide, a manganese-Me-containing oxide, a manganese-Me-containing hydroxide, a nickel-manganese-Me-containing oxide, a nickel-manganese-Me-containing hydroxide, or the like may be used.

When obtaining a lithium-nickel-manganese-containing composite oxide according to the embodiment, the firing temperature is important. The firing temperature is preferably 800 to 1,000°C, and more preferably 850 to 950°C. If the firing temperature is outside the range described above, it will become difficult to obtain the lithium-nickel-manganese-containing composite oxide according to the embodiment in which the occupancy of metal elements other than Li existing in the Li layer of the layered structure belonging to space group R-3m is in the range of 7% to 10% and which has a diffraction peak at 2θ in the range of 65° to 67° in an X-ray diffraction pattern when a non-aqueous electrolyte secondary battery is charged until the charge voltage reaches 4.8 V.

Furthermore, when obtaining a lithium-nickel-manganese-containing composite oxide according to the embodiment, the mixing ratio of source materials is also important. It is preferable to mix the lithium source, the nickel source, the manganese source, and optionally, the Me source so that the molar ratio Li:metal elements other than Li (Ni, Mn, and optionally Me) is preferably in the range of 1:1 to 1:1.16, and more preferably in the range of 1:1.08 to 1:1.16. If the mixing ratio is outside the range described above, for example, the occupancy of metal elements other than Li existing in the Li layer of the layered structure belonging to space group R-3m may be decreased (for example, less than 7%). As a result, it becomes difficult to obtain a lithium-nickel-manganese-containing composite oxide according to the embodiment which has a diffraction peak at 2θ in the range of 65° to 67° in an X-ray diffraction pattern when a non-aqueous electrolyte secondary battery is charged until the charge voltage reaches 4.8 V.

The content of the lithium-nickel-manganese-containing composite oxide according to the embodiment is, for example, from the viewpoint of more effectively suppressing degradation in charge-discharge cycle characteristics when charging and discharging are performed at a charge voltage of greater than or equal to 4.8 V, preferably greater than or equal to 80% by mass, and preferably greater than or equal to 90% by mass, relative to the total mass of the positive electrode active material.

Furthermore, the positive electrode active material may contain, in addition to the lithium-nickel-manganese-containing composite oxide according to the embodiment, another lithium-containing composite oxide. As the other lithium-containing composite oxide, for example, a lithium-nickel-manganese-containing composite oxide represented by composition formula $Li_\alpha Ni_\beta Mn_\gamma Me_{1-\beta-\gamma}O_2$ (where Me is a metal element other than Ni and Mn, $\alpha \leq 0.6$, $0.8 \leq \beta \leq 1.0$, and $\gamma \leq 0.2$) is preferable.

In the composition formula, $\alpha$ represents the molar ratio of Li to the total amount of Ni, Mn, and Me, and as described above, $\alpha \leq 0.6$ should be satisfied. From the viewpoint of battery capacity, preferably $0.4 \leq x \leq 0.6$.

In the composition formula, $\beta$ represents the molar ratio of Ni to the total amount of Ni, Mn, and Me, and as described above, $0.8 \leq y \leq 1.0$ should be satisfied. From the viewpoint of battery capacity, preferably $0.85 \leq y \leq 0.95$.

In the composition formula, $\gamma$ represents the molar ratio of Mn to the total amount of Ni, Mn, and Me, and as described above, $\gamma \leq 0.2$ should be satisfied. From the viewpoint of battery capacity, preferably $0.05 \leq y \leq 0.15$.

Me constituting the composition formula is not particularly limited as long as it is a metal element other than Li, Ni, and Mn. For example, Me is at least one metal element selected from the group consisting of Co, Fe, Ti, Bi, Nb, W, Mo, Ta, Al, Mg, Si, Cr, Cu, Sn, Zr, Na, K, Ba, Sr, Be, Zn, Ca, and B.

Other materials contained in the positive electrode active material layer will be described below.

Examples of the electroconductive material contained in the positive electrode active material layer include carbon powders, such as carbon black, acetylene black, Ketjen black, and graphite. These may be used alone or in combination of two or more.

As the binder contained in the positive electrode active material layer, a fluorine-based resin such as polytetrafluoroethylene (PTFE) or polyvinylidene fluoride (PVdF), PAN, a polyimide-based resin, an acrylic resin, a polyolefin-based resin, or the like can be used. These may be used alone or in combination of two or more.

<Negative electrode>

The negative electrode 12 includes a negative electrode current collector such as a metal foil, and a negative electrode active material layer formed on the negative electrode current collector. As the negative electrode current collector, a foil of a metal, such as copper, that is stable in the potential range of the negative electrode, a film in which the metal is disposed as a surface layer, or the like can be used. The negative electrode active material layer contains, for example, a negative electrode active material, a binder, and the like.

The negative electrode 12 is obtained, for example, by applying a negative electrode mixture slurry containing a negative electrode active material and a binder to a negative electrode current collector, followed by drying to form a negative electrode active material layer on the negative electrode current collector, and rolling the negative electrode active material layer.

The negative electrode active material contained in the negative electrode active material layer is not particularly limited as long as it can occlude and release lithium ions. Examples thereof include a carbon material and a metal that can form an alloy with lithium or an alloy compound containing the metal. Examples of the carbon material that can be used include graphites, such as natural graphite, non-graphitizable carbon, and artificial graphite, and cokes. Examples of the alloy compound include those containing lithium and at least one metal that can form an alloy. As the element that can form an alloy with lithium, silicon and tin are preferable, and silicon oxide, tin oxide, and the like in which these elements are bonded with oxygen can also be used. Furthermore, a mixture of the carbon material and a compound of silicon or tin can be used. In addition to the above, a material whose charge and discharge potential with respect to lithium metal such as lithium titanate is higher than that of the carbon material or the like can also be used.

As the binder contained in the negative electrode active material layer, as in the case of the positive electrode, a fluorine-based resin, PAN, a polyimide-based resin, an acrylic resin, a polyolefin-based resin, or the like can be used. In the case where the negative electrode mixture slurry is prepared using an aqueous solvent, styrene-butadiene rubber (SBR), CMC or a salt thereof, polyacrylic acid (PAA) or a salt thereof (PAA-Na, PAA-K, or the like; or may be a partially neutralized salt), polyvinyl alcohol (PVA), or the like may be used.

<Non-aqueous electrolyte>

The non-aqueous electrolyte includes a non-aqueous solvent and an electrolyte salt dissolved in the non-aqueous solvent. The non-aqueous electrolyte is not limited to a liquid electrolyte (non-aqueous electrolyte solution), but may be a solid electrolyte prepared using a gel polymer or the like. As the non-aqueous solvent, for example, an ester, an ether, a nitrile such as acetonitrile, an amide such as dimethylformamide, or a mixed solvent containing two or more of these solvents may be used. The non-aqueous solvent may contain a halogen substitution product in which at least part of hydrogen atoms of the solvent described above is substituted with halogen atoms, such as fluorine.

Examples of the ester include cyclic carbonate esters, such as ethylene carbonate (EC), propylene carbonate (PC), and butylene carbonate; chain carbonate esters, such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters, such as $\gamma$-butyrolactone (GBL) and $\gamma$-valerolactone (GVL); and chain carboxylate esters, such as methyl acetate, ethyl acetate, propyl acetate, methyl propionate (MP), ethyl propionate, and $\gamma$-butyrolactone.

Examples of the ether include cyclic ethers, such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, and crown ether; and chain ethers, such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen substitution product, fluorinated cyclic carbonate esters, such as fluoroethylene carbonate (FEC); fluorinated chain carbonate esters; and fluorinated chain carboxylate esters, such as fluoromethyl propionate (FMP) are preferably used.

The electrolyte salt is preferably a lithium salt. Examples of the lithium salt include $LiBF_4$, $LiClO_4$, $LiPF_6$, $LiAsF_6$, $LiSbF_6$, $LiAlCl_4$, LiSCN, $LiCF_3SO_3$, $LiCF_3CO_2$, $Li(P(C_2O_4)F_4)$, $LiPF_{6-x}(C_nF_{2n+1})_x$ (1 < x < 6, n is 1 or 2), $LiB_{10}Cl_{10}$, LiCl, LiBr, LiI, lithium chloroborane, lower aliphatic lithium carboxylates, borates such as $Li_2B_4O_7$ and $Li(B(C_2O_4)F_2)$, and imide salts such as $LiN(SO_2CF_3)_2$ and $LiN(C_lF_{2l+1}SO_2)(C_mF_{2m+1}SO_2)$ {l and m are integers of 0 or more}. These lithium salts may be used alone or in a mixture of two or more. Among these, from the viewpoint of ionic conductivity, electrochemical stability, and the like, $LiPF_6$ is preferably used. The concentration of the lithium salt is preferably 0.8 to 1.8 mol per liter of the non-aqueous solvent.

<Separator>

As the separator 13, for example, a porous sheet having ion permeability and an insulating property may be used. Specific examples of the porous sheet include a microporous thin film, woven fabric, and non-woven fabric. As the material for the separator 13, an olefin-based resin such as polyethylene or polypropylene, cellulose, or the like is preferably used. The separator 13 may be a layered body including a cellulose fiber layer and a thermoplastic resin fiber layer, such as an olefin-based resin, and a separator 13 having an aramid resin or the like applied on the surface thereof may be used.

EXAMPLES

The present invention will be further described in detail below with reference to examples. However, it is to be understood that the present invention is not limited the examples.

<Example 1>

[Production of positive electrode active material]

A Ni-Mn-containing oxide (Ni:Mn molar ratio = 50:50) and $Li_2CO_3$ were mixed so that the molar ratio between the total amount of Ni and Mn and Li was 1:1, and the resulting mixture was fired at 900°C for 10 hours. The fired product was washed with water to obtain a lithium-nickel-manganese-containing composite oxide. Results of composition analysis by ICP on the lithium-nickel-manganese-containing composite oxide showed that the molar ratio of Li to the total amount of Ni and Mn was 1 and the composite oxide had a composition represented by $LiNi_{0.5}Mn_{0.5}O_2$.

Furthermore, the lithium-nickel-manganese-containing composite oxide was subjected to powder X-ray diffraction measurement under the conditions described above to obtain an X-ray diffraction pattern. As a result, a diffraction line showing a layered structure belonging to space group R-3m was confirmed. Furthermore, the occupancy of metal elements other than Li existing in the Li layer was 9.5% by mole. This lithium-nickel-manganese-containing composite oxide was used as a positive electrode active material of Example 1.

[Production of positive electrode]

95 Parts by mass of the positive electrode active material, 3 parts by mass of acetylene black serving as an electroconductive material, and 2 parts by mass of polyvinylidene fluoride serving as a binder were mixed. The resulting mixture was kneaded using a kneader (T. K. HIVIS MIX, manufactured by PRIMIX Corporation) to prepare a positive electrode mixture slurry. Subsequently, the positive electrode mixture slurry was applied to an aluminum foil with a thickness of 15 μm, and by drying the resulting coating film, a positive electrode active material layer was formed on the aluminum foil, thereby obtaining a positive electrode.

[Preparation of non-aqueous electrolyte]

$LiPF_6$ was dissolved at a concentration of 1 mol/L in a mixed solvent obtained by mixing fluoroethylene carbonate (FEC) and 3,3,3-trifluoromethyl propionate (FMP) at a mass ratio of 1:3 to prepare a non-aqueous electrolyte.

[Production of test cell]

The positive electrode of Example 1 and a negative electrode containing graphite as a negative electrode active material were stacked so as to face each other with a separator interposed therebetween, and by winding the stacked body, an electrode body was produced. Subsequently, by inserting the electrode body and the non-aqueous electrolyte into an outer case made of aluminum, a test cell was produced.

<Example 2>

A lithium-nickel-manganese-containing composite oxide was obtained as in Example 1 except that the Ni-Mn-containing oxide and $Li_2CO_3$ were mixed so that the molar ratio between the total amount of Ni and Mn and Li was 1:1.08 in the production of a positive electrode active material. Results of composition analysis by ICP on the lithium-nickel-manganese-containing composite oxide showed that the molar ratio of Li to the total amount of Ni and Mn was 1.08 and the composite oxide had a composition represented by $Li_{1.08}Ni_{0.5}Mn_{0.5}O_2$.
Furthermore, the lithium-nickel-manganese-containing composite oxide was subjected to powder X-ray diffraction measurement under the conditions described above to obtain an X-ray diffraction pattern. As a result, a diffraction line showing a layered structure belonging to space group R-3m was confirmed. Furthermore, the occupancy of metal elements other than Li existing in the Li layer was 8.2%.
Using this lithium-nickel-manganese-containing composite oxide as a positive electrode active material of Example 2, a test cell was produced as in Example 1.

<Example 3>

A lithium-nickel-manganese-containing composite oxide was obtained as in Example 1 except that the Ni-Mn-containing oxide and $Li_2CO_3$ were mixed so that the molar ratio between the total amount of Ni and Mn and Li was 1:1.16 in the production of a positive electrode active material. Results of composition analysis by ICP on the lithium-nickel-manganese-containing composite oxide showed that the molar ratio of Li to the total amount of Ni and Mn was 1.16 and the composite oxide had a composition represented by $Li_{1.16}Ni_{0.5}Mn_{0.5}O_2$.
Furthermore, the lithium-nickel-manganese-containing composite oxide was subjected to powder X-ray diffraction measurement under the conditions described above to obtain an X-ray diffraction pattern. As a result, a diffraction line showing a layered structure belonging to space group R-3m was confirmed. Furthermore, the occupancy of metal elements other than Li existing in the Li layer was 8.0%.
Using this lithium-nickel-manganese-containing composite oxide as a positive electrode active material of Example 3, a test cell was produced as in Example 1.

<Comparative Example 1>

By performing lithium ion exchange on a Ni-Mn-containing oxide, a lithium-nickel-manganese-containing composite oxide was obtained. Specifically, at an ion exchange temperature of 275°C, a Ni-Mn-containing oxide (Ni:Mn molar ratio = 1:1) was introduced into lithium sulfate molten in liquid form, and held for 10 hours. After the ion exchange process, a cooled solid was dissolved in pure water and subjected to filtration separation, followed by drying at 150°C. The ion exchange + filtration separation step was repeated three times. The finally obtained composite oxide was subjected to column cleaning with ethanol and then dried at 150°C for one hour to obtain a lithium-nickel-manganese-containing composite oxide. Results of composition analysis by ICP on the lithium-nickel-manganese-containing composite oxide showed that the molar ratio of Li to the total amount of Ni and Mn was 0.88 and the composite oxide had a composition represented by $Li_{0.88}Ni_{0.46}Mn_{0.54}O_2$.
Furthermore, the lithium-nickel-manganese-containing composite oxide was subjected to powder X-ray diffraction measurement under the conditions described above to obtain an X-ray diffraction pattern. As a result, a diffraction line showing a layered structure belonging to space group R-3m was confirmed. Furthermore, the occupancy of metal elements other than Li existing in the Li layer was 5%.

A test cell was produced as in Example 1 except that this lithium-nickel-manganese-containing composite oxide was used as a positive electrode active material of Comparative Example 1, and a non-aqueous electrolyte solution prepared by dissolving lithium hexafluorophosphate at a concentration of 1 mol/L in a mixed solvent of ethylene carbonate and diethyl carbonate was used.

<Comparative Example 2>

A Ni-Mn-containing oxide (Ni:Co:Mn molar ratio = 35:35:30) and $Li_2CO_3$ were mixed so that the molar ratio between the total amount of Ni and Mn and Li was 1:1.08, and the resulting mixture was fired at 900°C for 10 hours. The fired product was washed with water to obtain a lithium-nickel-manganese-containing composite oxide. Results of composition analysis by ICP on the lithium-nickel-manganese-containing composite oxide showed that the molar ratio of Li to the total amount of Ni and Mn was 1.08 and the composite oxide had a composition represented by $Li_{1.08}Ni_{0.35}Co_{0.35}Mn_{0.30}O_2$.

Furthermore, the lithium-nickel-manganese-containing composite oxide was subjected to powder X-ray diffraction measurement under the conditions described above to obtain an X-ray diffraction pattern. As a result, a diffraction line showing a layered structure belonging to space group R-3m was confirmed. Furthermore, the occupancy of metal elements other than Li existing in the Li layer was 1.8%.

Using this lithium-nickel-manganese-containing composite oxide as a positive electrode active material of Comparative Example 2, a test cell was produced as in Example 1.

<X-ray diffraction measurement after charging>

For each of the test cells produced in Examples and Comparative Example 2, in an environment of 25°C, constant current charging was performed at a constant current of 0.05C until the battery voltage reached 4.8 V, and then, constant voltage charging was performed until the current value reached 0.02C. Next, discharging was performed at a constant current of 0.05C until the battery voltage reached 2.5 V. This charge-discharge cycle was repeated 10 times.

For the test cells produced in Comparative Example 1, in an environment of 25°C, constant current charging was performed at a constant current of 0.05C until the battery voltage reached 4.5 V, and then, constant voltage charging was performed until the current value reached 0.02C. Next, discharging was performed at a constant current of 0.05C until the battery voltage reached 2.5 V. This charge-discharge cycle was repeated 10 times.

Each of the test cells of Examples and Comparative Examples discharged after the charge cycles had been performed was disassembled in a dry room, and the positive electrode active material was collected. The collected positive electrode active material was subjected to powder X-ray diffraction measurement under the conditions described above to obtain an X-ray diffraction pattern. The results showed that each of the positive electrode active materials of Examples 1 to 3 had a diffraction peak of the (018) plane at 2θ in the range of 63.2° to 64.5° in the X-ray diffraction pattern, a diffraction peak of the (110) plane at 2θ in the range of 64° to 65.3°, and a diffraction peak at 2θ in the range of greater than or equal to 65° and less than or equal to 67°. On the other hand, the positive electrode active material of Comparative Example 1 had a diffraction peak of the (018) plane at 2θ in the range of 63.2° to 64.5° in the X-ray diffraction pattern and a diffraction peak of the (110) plane at 2θ in the range of 64° to 65.3°, and did not have a diffraction peak at 2θ in the range of greater than or equal to 65° and less than or equal to 67°. Furthermore, the positive electrode active material of Comparative Example 2 had a diffraction peak of the (018) plane at 2θ in the range of 63.2° to 64.5° in the X-ray diffraction pattern and a diffraction peak of the (110) plane at 2θ in the range of 64° to 65.3°, and did not have a diffraction peak at 2θ in the range of greater than or equal to 65° and less than or equal to 67°.

<Evaluation of charge-discharge cycle characteristics>

For each of the test cells produced in Examples and Comparative Example 2, in an environment of 25°C, charging was performed at a constant current of 0.05C until the charge voltage reached 4.8 V, and then, discharging was performed at a constant current of 0.05C until the discharge voltage reached 2.5 V. This charge-discharge cycle was repeated 10 times. The capacity retention ratio in 10 cycles was determined by the following formula:

Capacity retention ratio (%) = (discharge capacity at

the tenth cycle/discharge capacity at the first cycle) × 100

For the test cell produced in Comparative Example 1, in an environment of 25°C, charging was performed at a constant current of 0.05C until the charge voltage reached 4.5 V, and then, discharging was performed at a constant current of 0.05C until the discharge voltage reached 2.5 V. This charge-discharge cycle was repeated 10 times, and the capacity retention ratio in 10 cycles was determined.

Table 1 summarizes the results of the discharge capacity at the first cycle and the capacity retention ratio in 10 cycles in each of Examples and Comparative Examples. A higher value of capacity retention ratio indicates that degradation in charge-discharge cycle characteristics is more suppressed.

[Table 1]

|  | Lithium-nickel-manganese-containing composite oxide | | Battery characteristics | |
|---|---|---|---|---|
|  | Li/(Ni + Mn) molar ratio | Presence or absence of peak at $2\theta = 65\,°$ to $67\,°$ | Discharge capacity at first cycle (mAh/g) | Capacity retention ratio in 10 cycles |
| Example 1 | 1.0 | Present | 202 | 98 |
| Example 2 | 1.08 | Present | 215 | 99 |
| Example 3 | 1.16 | Present | 215 | 100 |
| Comparative Example 1 | 0.88 | Absent | 208 | 96 |
| Comparative Example 2 | 1.08 | Absent | 228 | 86 |

When compared between Examples 1 to 3 and Comparative Example 2 having the same charge voltage of 4.8 V in the charge-discharge cycle, the capacity retention ratio in 10 cycles of Examples 1 to 3 was higher than that of Comparative Example 2, and thus, degradation in charge-discharge cycle characteristics was suppressed. Furthermore, in Comparative Example 1, although the charge voltage in the charge-discharge cycle was lower than that in Examples 1 to 3, the capacity retention ratio in 10 cycles of Comparative Example 1 was lower than that of Examples 1 to 3.

Reference Signs List

| | |
|---|---|
| 10 | secondary battery |
| 11 | positive electrode |
| 12 | negative electrode |
| 13 | separator |
| 14 | electrode body |
| 15 | battery case |
| 16 | outer can |
| 17 | sealing body |
| 18, 19 | insulating plate |
| 20 | positive electrode lead |
| 21 | negative electrode lead |
| 22 | protruding portion |
| 23 | filter |
| 24 | lower valve body |
| 25 | insulating member |
| 26 | upper valve body |
| 27 | cap |
| 28 | gasket |

**Claims**

1. A positive electrode active material for a non-aqueous electrolyte secondary battery comprising a lithium-nickel-manganese-containing composite oxide which is represented by composition formula $Li_xNi_yMn_zMe_{1-y-z}O_2$ (where

Me is a metal element other than Li, Ni, and Mn, $x \leq 1.16$, $0.3 \leq y \leq 0.7$, and $0.3 \leq z \leq 0.7$), has a layered structure belonging to space group R-3m, and has a diffraction peak at $2\theta$ in the range of greater than or equal to 65° and less than or equal to 67° in an X-ray diffraction pattern when charging and discharging are performed until the charge voltage reaches 4.8 V.

2. The positive electrode active material for a non-aqueous electrolyte secondary battery according to Claim 1, wherein the positive electrode active material comprises a lithium-nickel-manganese-containing composite oxide represented by composition formula $Li_{\alpha}Ni_{\beta}Mn_{\gamma}Me_{1-\beta-\gamma}O_2$ (where Me is a metal element other than Ni and Mn, $\alpha \leq 0.6$, $0.8 \leq \beta \leq 1.0$, and $\gamma \leq 0.2$).

3. The positive electrode active material for a non-aqueous electrolyte secondary battery according to Claim 1, wherein, in the composition formula, $x < 1.08$.

4. The positive electrode active material for a non-aqueous electrolyte secondary battery according to Claim 1, wherein, in the composition formula, $0.4 < y < 0.6$, and $0.4 < z < 0.6$.

5. The positive electrode active material for a non-aqueous electrolyte secondary battery according to Claim 1, wherein the occupancy of metal elements other than Li existing in a Li layer of the layered structure is in the range of 7% to 10%.

6. A non-aqueous electrolyte secondary battery comprising the positive electrode active material for a non-aqueous electrolyte secondary battery according to any one of Claims 1 to 5.

# Figure 1

**INTERNATIONAL SEARCH REPORT**

| International application No. |
| --- |
| PCT/JP2020/017614 |

**A. CLASSIFICATION OF SUBJECT MATTER**
C01G 53/00(2006.01)i; H01M 4/505(2010.01)i; H01M 4/525(2010.01)i
FI: H01M4/525; H01M4/505; C01G53/00 A

According to International Patent Classification (IPC) or to both national classification and IPC

**B. FIELDS SEARCHED**

Minimum documentation searched (classification system followed by classification symbols)
C01G53/00; H01M4/505; H01M4/525

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2008-293988 A (GS YUASA CORPORATION) 04.12.2008 (2008-12-04) claims, paragraphs [0202]-[0225], examples | 1, 3-6<br>2 |
| X<br>Y | JP 2009-117369 A (TODA KOGYO CORP.) 28.05.2009 (2009-05-28) claims, example 4 | 1, 3-6<br>2 |
| X<br>Y | JP 2013-109910 A (SUMITOMO METAL MINING CO., LTD.) 06.06.2013 (2013-06-06) claims, examples | 1, 3-6<br>2 |
| X<br>Y | JP 2019-503570 A (BYD COMPANY LIMITED) 07.02.2019 (2019-02-07) claims, paragraph [0041], examples | 1, 3-6<br>2 |

☒ Further documents are listed in the continuation of Box C.     ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 17 July 2020 (17.07.2020) | 04 August 2020 (04.08.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2020/017614

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2013-137939 A (PANASONIC CORP.) 11.07.2013 | 1, 3-6 |
| Y | (2013-07-11) claims, paragraph [0012], examples | 2 |
| Y | JP 2015-164109 A (ASAHI KASEI CORPORATION) 10.09.2015 (2015-09-10) claims, paragraphs [0069]-[0071] | 2 |

Form PCT/ISA/210 (continuation of second sheet) (January 2015)

INTERNATIONAL SEARCH REPORT
Information on patent family members

International application No.

PCT/JP2020/017614

| Patent Documents referred in the Report | Publication Date | Patent Family | Publication Date |
|---|---|---|---|
| JP 2008-293988 A | 04 Dec. 2008 | EP 1391950 A1<br>claims, paragraphs [0111]-[0123], examples | |
| JP 2009-117369 A | 28 May 2009 | US 2010/0099027 A1<br>claims, example 4<br>EP 2128915 A1<br>CN 101622741 A<br>KR 10-2009-0120469 A | |
| JP 2013-109910 A | 06 Jun. 2013 | (Family: none) | |
| JP 2019-503570 A | 07 Feb. 2019 | US 2019/0036156 A1<br>claims, paragraph [0032], examples<br>WO 2017/128989 A1<br>EP 3407416 A1<br>CN 107026284 A<br>KR 10-2018-0102666 A | |
| JP 2013-137939 A | 11 Jul. 2013 | (Family: none) | |
| JP 2015-164109 A | 10 Sep. 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008137837 A

- JP 2015198052 A